# EUROPEAN PATENT APPLICATION

(11) **EP 3 176 886 A1**
(43) Date of publication of application: **07.06.2017**
(21) Application number: 16761683.8
(22) Date of filing: 04.03.2016
(51) Int. Cl.: H01S 3/067, G02B 6/036, H01S 3/10

(54) **OPTICAL FIBER, FIBER AMPLIFIER, AND FIBER LASER**

(30) Priority: 12.03.2015 JP 2015049913
(71) Applicant: FUJIKURA LTD., Tokyo 135-8512 (JP)
(72) Inventor: KASHIWAGI, Masahiro, Sakura-shi Chiba 285-8550 (JP)
(74) Representative: Cabinet Plasseraud
(86) International application number: PCT/JP2016/056884
(87) International publication number: WO 2016/143713

(57) **Abstract**

Provided is an optical fiber (1) including a low-refractive-index layer (22) that is disposed between a first cladding (21) and a second cladding (23) and that has a refractive index between those of the first and second claddings (21) and (23). The first cladding (21) has a cladding diameter that is 2.5 or more times the MFD of the fundamental mode at a fluorescence wavelength of an active element in a core (10), and the low-refractive-index layer (21) has a thickness that is equal to or more than an absorption wavelength of the active element.

## Description

### Technical Field

The present invention relates to an amplifying optical fiber for use in fiber amplifiers, fiber lasers, and the like.

### Background Art

Fiber lasers, fiber amplifiers, and the like are widely used in various fields such as machining and telecommunications fields. The most commonly used one of such devices is a device that includes a double cladding fiber as an amplifying optical fiber. The double cladding fiber includes: a core doped with an active element such as a rare earth element; a first cladding (inner cladding) disposed around the core; and a second cladding (outer cladding) disposed around the first cladding (for example, refer to Patent Literature 1).

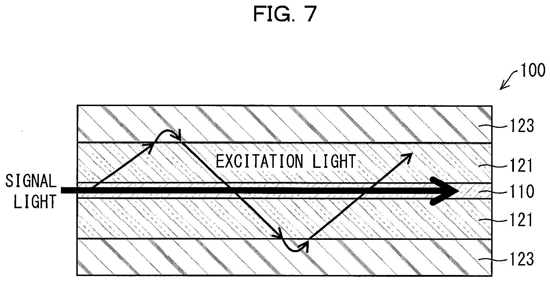

Fig. 7 illustrates such a known double cladding fiber. In a double cladding fiber 100 shown in Fig. 7, signal light is confined within a core 110 by a first cladding 121 and is guided through the core 110, whereas excitation light, which changes the active element in the core 110 into the population inversion state, is confined within the first cladding by a second cladding 123 and is guided through the first cladding 121. The core 110 and the first cladding 121 are formed of glass, whereas the second cladding 123 is formed of resin.

### Citation List

### [Patent Literature]

[Patent Literature 1]
Japanese Patent No. 4954737 (Date of Registration: March 23, 2012)

### Summary of Invention

### Technical Problem

Meanwhile, in the double cladding fiber 100, which is for use in high-power devices such as fiber lasers and fiber amplifiers, the first cladding 121 receives high-power excitation light of the order of several kilowatts to several tens of kilowatts. The entering of such high-power excitation light into the first cladding 121 causes a phenomenon of heat generation in the second cladding 123. Such heat accelerates the deterioration of the second cladding 123 formed of resin and, in some cases, causes burn damage. This causes a problem in that not only the double cladding fiber 100 but also the device becomes less reliable.

The present invention was made in view of the above problems, and an object of the present invention is to achieve an optical fiber and the like that are capable of, without significantly affecting the core characteristics such as cutoff wavelength, preventing or reducing the generation of heat in a second cladding which is caused by excitation light.

### Solution to Problem

In order to attain the above object, the inventors of the present invention found that, when excitation light is totally reflected at the boundary between first and second claddings of a double cladding fiber, the evanescent wave of the excitation light penetrates into the second cladding and this penetrated excitation light is absorbed by a resin that constitutes the second cladding, resulting in the generation of heat in the second cladding. The inventors studied hard to find a structure that prevents or reduces this heat generation without significantly affecting core characteristics, and accomplished the present invention.

In view of such circumstances, an optical fiber in accordance with an embodiment of the present invention includes: a core doped with an active element; a first cladding surrounding the core; a second cladding surrounding the first cladding; and a low-refractive-index layer that is disposed between the first cladding and the second cladding and that is lower in refractive index than the first cladding and higher in refractive index than the second cladding. The first cladding has a cladding diameter that is 2.5 or more times the mode field diameter (MFD) of the fundamental mode at a fluorescence wavelength of the active element, and the low-refractive-index layer has a thickness that is equal to or more than an absorption wavelength of the active element.

### Advantageous Effects of Invention

The present invention makes it possible to achieve an optical fiber that is capable of, without significantly affecting core characteristics, preventing or reducing the generation of heat in a second cladding which is caused by excitation light.

### Brief Description of Drawings

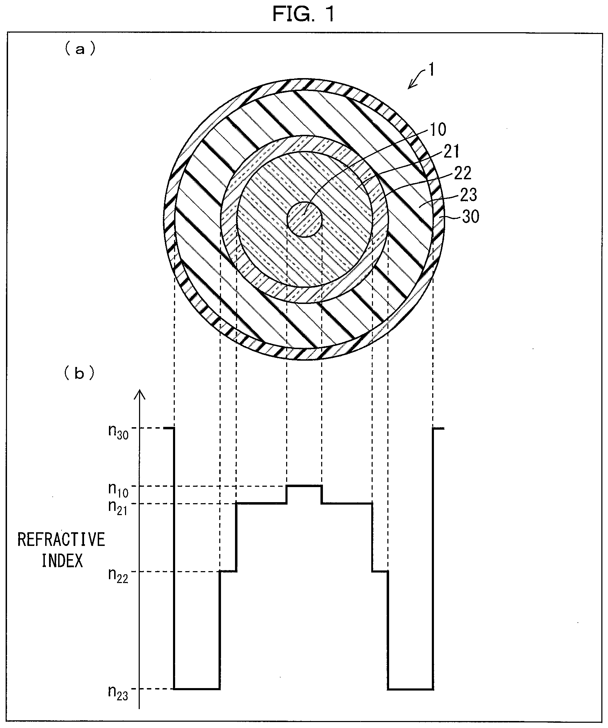

(a) of Fig. 1 illustrates a cross section perpendicular to the waveguiding direction of an optical fiber of the first embodiment of the present invention. (b) of Fig. 1 illustrates the refractive indices of constituents of the optical fiber.
Fig. 2 is a graph showing the relationship between the inner diameter of a low-refractive-index layer of the optical fiber and the cutoff wavelength for light that is guided through the core.
Fig. 3 is an enlarged view of a cross section parallel to the waveguiding direction of the optical fiber.
Fig. 4 schematically illustrates a configuration of a fiber amplifier of the second embodiment of the present invention.
Fig. 5 schematically illustrates a configuration of a fiber laser of the third embodiment of the present invention.
Fig. 6 schematically illustrates a configuration of a fiber laser of the fourth embodiment of the present invention.
Fig. 7 illustrates a cross section in the waveguiding direction of a known double cladding fiber.

### Description of Embodiments

The following describes embodiments of the present invention with reference to the drawings.

### [First embodiment]

### (Optical fiber)

(a) of Fig. 1 illustrates a cross section perpendicular to the waveguiding direction of an optical fiber 1 of the present embodiment, and (b) of Fig. 1 illustrates the refractive indices of constituents of the optical fiber 1.

As illustrated in (a) of Fig. 1, the optical fiber 1 includes a core 10, a first cladding 21 surrounding the core 10, a low-refractive-index layer 22 surrounding the first cladding 21, and a second cladding 23 surrounding the low-refractive-index layer 22. The core 10, the first cladding 21, and the low-refractive-index layer 22 are formed of a glass base material, and the second cladding 23 is formed of a resin base material. Although the optical fiber 1 has a jacket layer 30 that is formed of a resin base material and that surrounds the second classing 23, the jacket layer 30 is not essential.

As shown in (b) of Fig. 1, the refractive index decreases in the order of the core 10 > the first cladding 21 > the low-refractive-index layer 22 > the second cladding 23. For the optical fiber 1 to have such a distribution of refractive index, the core 10 is formed by adding, to the material for the first cladding 21, a dopant that raises the refractive index. The low-refractive-index layer 22 is formed by adding, to the material for the first cladding 21, a dopant that lowers the refractive index. In the case where the material for the first cladding 21 is, for example, a glass (main component is quartz), examples of the dopant that raises the refractive index include germanium (Ge), aluminum (Al), and phosphorus (P), and examples of the dopant that lowers the refractive index include fluorine (F). It should be noted that the material for the first cladding 21, the presence or absence of a dopant, and types of element are not limited to such. In the case where there is the jacket layer 30, the refractive index of the jacket layer 30 is higher than that of any other constituent of the optical fiber 1.

The second cladding 23 and the jacket layer 30 may be a known cladding and a known layer, respectively. For example, the second cladding 23 and the jacket layer 30 are each formed of a resin having a desired refractive index.

The core 10 is doped with an active element. The active element is an element which goes into the population inversion state upon absorption of excitation light. Specific examples include rare earth elements such as ytterbium (Yb), erbium (Er), neodymium (Nd), thulium (Tm), and holmium (Ho). Examples of the active element other than the rare earth elements include bismuth (Bi) and chromium (Cr).

In the optical fiber 1, the first cladding 21 has a cladding diameter that is 2.5 or more times the mode field diameter (MFD) of the fundamental mode at a fluorescence wavelength of the active element in the core 10. The first cladding 21 is, as described earlier, surrounded by the low-refractive-index layer 22 having a refractive index n₂₂ that is lower than the refractive index n₂₁ of the first cladding and higher than the refractive index n₂₃ of the second cladding 23. Since the low refractive layer 22 is disposed outside the first cladding 21 as described above, the low-refractive-index layer 22 in a cross section perpendicular to the waveguiding direction of the optical fiber 1 does not overlap an area 2.5 times the MFD of the fundamental mode at a fluorescence wavelength of the active element in the core. Therefore, it can be said that the low-refractive-index layer 22 is sufficiently apart from the core 10.

Furthermore, the low-refractive-index layer 22 has a thickness (the distance from the inner surface to the outer surface of the low-refractive-index layer 22) that is equal to or more than an absorption wavelength of the active element in the core 10.

In the case where the active element is Yb, the fluorescence wavelength ranges from 1050 nm to 1150 nm and the absorption wavelength ranges from 900 nm to 1000 nm. In the case where the active element is Er, the fluorescence wavelength ranges from 1530 nm to 1620 nm and the absorption wavelength ranges from 970 nm to 990 nm and from 1470 nm to 1490 nm. In the case where the active element is Nd, the fluorescence wavelength ranges from 1000 nm to 1200 nm and the absorption wavelength ranges from 700 nm to 950 nm. In the case where the active element is Tm, the fluorescence wavelength ranges from 1950 nm to 2050 nm and the absorption wavelength ranges from 780 nm to 810 nm. In the case where the active element is Ho, the fluorescence wavelength ranges from 2100 nm to 2200 nm and the absorption wavelength ranges from 800 nm to 820 nm. In the case where the active element is Bi, the fluorescence wavelength ranges from 1000 nm to 1600 nm and the absorption wavelength ranges from 400 nm to 850 nm. In the case where the active element is Cr, the fluorescence wavelength ranges from 1100 nm to 1600 nm and the absorption wavelength ranges from 430 nm to 450 nm and from 580 nm to 600 nm.

It should be noted here that, while the lower limit of the thickness of the low-refractive-index layer 22 is equal to or more than an absorption wavelength of the active element in the core 10 as described earlier, the upper limit of the thickness is found in the following manner. That is, the upper limit of the thickness is found by subtracting the cladding diameter of the first cladding 21 from the upper limit of the size of a glass component layer surrounding the core 10 (the glass component layer here is the first cladding 21 + the low-refractive-index layer 22) and dividing it by two.

When excitation light (light with an absorption wavelength of the active element in the core 10) enters the first cladding 21 of such an optical fiber 1, the excitation light is guided through the first cladding 21 and passes through the core 10, whereby the active element in the core 10 goes into the population inversion state. The active element in the population inversion state undergoes a series of induced emissions in response to seed light which is signal light supplied from outside or naturally-emitted light. The signal light (light with a fluorescence wavelength of the active element in the core 10) induced and emitted from the active element in this way is guided through the core 10.

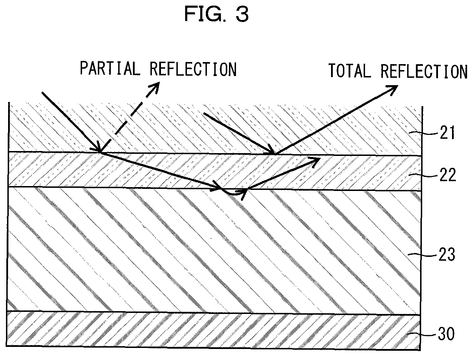

It should be noted here that the optical fiber 1 includes the low-refractive-index layer 22 and that the thickness of the low-refractive-index layer 22 is equal to or more than an absorption wavelength of the active element in the core 10. Therefore, as illustrated in Fig. 3, which is an enlarged view of a cross section parallel to the waveguiding direction of the optical fiber 1, in a case where the excitation light is guided through the first cladding 21, most of the evanescent wave of the light does not reach the second cladding 23. This makes it possible to prevent or reduce the generation of heat in the second cladding 23 and thus possible to prevent or reduce the deterioration of the second cladding 23.

Furthermore, since the cladding diameter of the first cladding 21 is 2.5 or more times the MFD of the fundamental mode at a fluorescence wavelength (which equals the wavelength of signal light guided through the core 10) of the active element in the core 10, the low-refractive-index layer 22 is sufficiently apart from the core 10 and thus it is possible to significantly reduce the effects of the low-refractive-index layer 22 on the signal light emitted from the active element and guided through the core 10. That is, it is possible to significantly reduce the effects of the low-refractive-index layer 22 on the core characteristics such as cutoff wavelength.

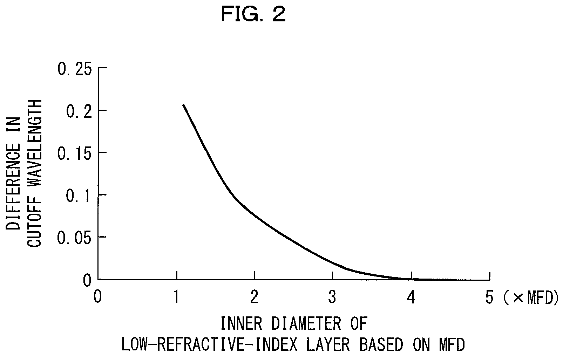

The following specifically describes how the effects of the low-refractive-index layer 22 on the characteristics of the core 10 are significantly reduced in the optical fiber 1. Fig. 2 is a graph showing the relationship between the inner diameter of the low-refractive-index layer 22 (in other words, the cladding diameter of the first cladding 21) and the cutoff wavelength for light guided through the core 10. Fig. 2 demonstrates that, in a case where the inner diameter of the low-refractive-index layer 22 (in other words, the cladding diameter of the first cladding 21) is 2.5 or more times the MFD of the fundamental mode at a fluorescence wavelength of the active element in the core 10, a change in cutoff wavelength is 5% or less. Fig. 2 further demonstrates that, in a case where the inner diameter of the low-refractive-index layer 22 is 3.5 or more times the MFD of the fundamental mode at a fluorescence wavelength of the active element in the core 10, a change in cutoff wavelength is 1% or less. It should be noted that the parameters of the optical fiber used for the determination of the cutoff wavelength against the inner diameter of the low-refractive-index layer shown in Fig. 2 are as follows: core diameter is 30 µm, the NA of the core is 0.06, the active element in the core is Yb, the NA of the low-refractive-index layer is 0.22, and the outer diameter of the fiber is 300 µm.

As described above, the optical fiber 1 is capable of preventing or reducing heat generation caused by excitation light without significantly affecting the core characteristics such as cutoff wavelength. Therefore, devices including the optical fiber 1, such as fiber lasers and fiber amplifiers, have ensured performance and reliability.

Furthermore, the area ratio of the first cladding 21 to the low-refractive-index layer 22 in a cross section is preferably 85/15 or more and 90/10 or less because this effectively confines the excitation light to the first cladding 21.

### (Production method)

The following roughly describes a way of producing a base body (preform) by a method of producing the optical fiber 1.

First, the first cladding 21 is formed around the core 10 which has been obtained by adding, to the material (quartz glass) for the first cladding 21, (i) a dopant that raises the refractive index and (ii) an active element. Alternatively, the core 10 is formed inside the first cladding 21. These processes may be performed by known techniques. These processes are carried out so that the cladding diameter of the first cladding 21 is 2.5 or more times the mode field diameter of the fundamental mode at a fluorescence wavelength of the active element in the core 10.

Next, the low-refractive-index layer 22 is formed from the material (quartz glass) for the first cladding 21 doped with a dopant that lowers the refractive index. This process is carried out so that the thickness of the low-refractive-index layer 22 (the thickness is the distance from the inner surface to the outer surface of the low-refractive-index layer 22) is equal to or more than an absorption wavelength of the active element in the core 10. Then, in accordance with a known technique, the second cladding 23 is formed and then the jacket layer 30 is formed.

### (Example)

The following describes an example of the optical fiber 1.

In the present example, the first cladding 21 is formed of a glass having a refractive index n₂₁ of 1.450 and the core 10 of the optical fiber 1 is formed of the same glass as the first cladding 21, which glass is doped with Ge. The refractive index n₁₀ of the core 10 is 1.452. The core 10 is further doped with Yb as an active element. The low-refractive-index layer 22 is formed of the same glass as the first cladding 21, which glass is doped with F. The refractive index n₂₂ of the low-refractive-index layer 22 is 1.430. The second cladding 23 is formed of a resin having a refractive index n₂₃ of 1.380. In the present example, the optical fiber 1 includes no jacket layer 30.

The core 10 is 15 µm in radius and thus has a core diameter of 30 µm (30 µm across). The NA of the core 10 is 0.06. The cladding diameter of the first cladding is 120 µm (120 µm across). Therefore, the thickness of the first cladding 21 (the thickness is the distance from the inner surface to the outer surface of the first cladding 21) is 45 µm. The cladding diameter, 120 µm, of the first cladding is 2.5 or more times the MFD of the fundamental mode at a fluorescence wavelength (1050 nm to 1150 nm) of Yb doped in the core 10.

The thickness of the low-refractive-index layer 22 is 5 µm, which is a thickness equal to or more than an absorption wavelength (900 nm to 1000 nm) of Yb doped in the core 10. The NA of the low-refractive-index layer 22 is 0.22. The thickness of the second cladding 23 surrounding the low-refractive-index layer 22 (the thickness is the distance from the inner surface to the outer surface of the second cladding 23) is 20 µm and the thickness of the jacket layer 30 (the thickness is the distance from the inner surface to the outer surface of the jacket layer 30) is 30 µm. The NA between the low-refractive-index layer 22 and the second cladding 23 is 0.41.

Those values listed above are examples and do not imply any limitation.

### [Second embodiment]

The following describes a fiber amplifier of the second embodiment of the present invention.

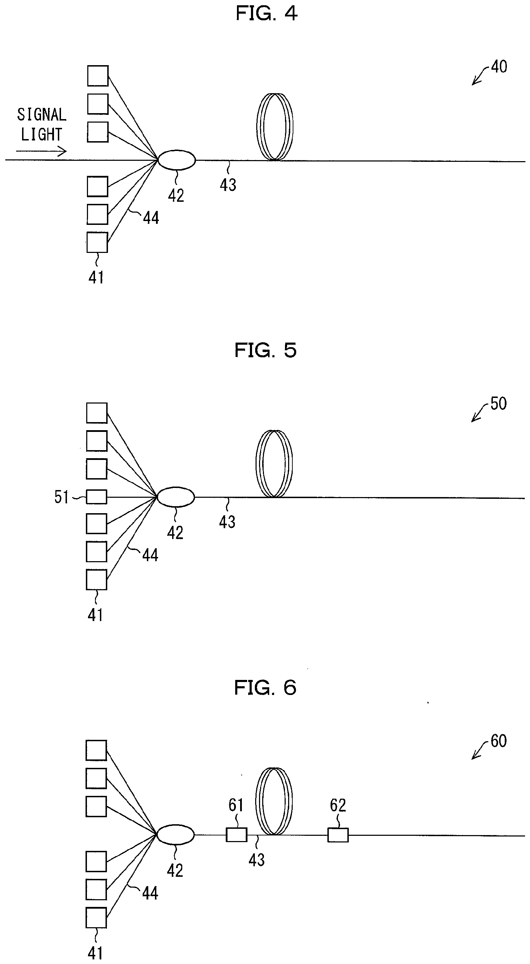

Fig. 4 schematically illustrates a configuration of a fiber amplifier 40 of the present embodiment. As illustrated in Fig. 4, the fiber amplifier 40 is a device that includes excitation light sources 41, a pump combiner 42, and an amplifying optical fiber 43 and that amplifies signal light.

The amplifying optical fiber 43 includes: a core that guides signal light; a first cladding that surrounds the core and that guides excitation light from each of the excitation light sources 41; a second cladding surrounding the first cladding; and a low-refractive-index layer disposed between the first cladding and the second cladding and having a refractive index that is lower than that of the first cladding and higher than that of the second cladding. The first cladding has a cladding diameter that is 2.5 or more times the mode field diameter of the fundamental mode of the signal light, and the low-refractive-index layer has a thickness that is equal to or more than the wavelength of the excitation light. Therefore, the optical fiber 1 in the first embodiment may be used as the amplifying optical fiber 43.

An excitation light source 41 is constituted by, for example, a laser diode. The laser diode for use in the present embodiment may be, for example, a Fabry-Perot semiconductor laser including a GaAs-based semiconductor. The excitation light source 41 emits excitation light that excites the active element doped in the core of the amplifying optical fiber 43.

The excitation light from the excitation light source 41 is guided through an optical fiber 44 and enters the pump combiner 42. It should be noted that the optical fiber 44, which connects the excitation light source 41 with the pump combiner 42, may be a known optical fiber. The excitation light, which leaves the pump combiner 42 and enters the first cladding of the amplifying optical fiber 43, is then guided through the first cladding and, when passing through the core of the amplifying optical fiber 43, changes the active element in the core into the population inversion state. The active element in the population inversion state undergoes a series of induced emissions in response to seed light which is the signal light supplied from outside or naturally-emitted light. The signal light induced and emitted from the active element in this way is guided through the core of the amplifying optical fiber 43.

The amplifying optical fiber 43 is capable of preventing or reducing heat generation caused by excitation light without significantly affecting the core characteristics. Therefore, the fiber amplifier 40 has ensured performance and reliability.

### [Third embodiment]

The following describes a fiber laser of the third embodiment of the present invention. It should be noted that the same or corresponding constituents to those described above are assigned identical referential numerals and their descriptions are not repeated here unless otherwise specified.

Fig. 5 schematically illustrates a configuration of a fiber laser 50 of the present embodiment. As illustrated in Fig. 5, the fiber laser 50 is a device that includes a signal light source 51, excitation light sources 41, a pump combiner 42, and an amplifying optical fiber 43 and that amplifies signal light from the signal light source 51.

The amplifying optical fiber 43 includes: a core that guides the signal light from the signal light source 51; a first cladding that surrounds the core and that guides excitation light from each of the excitation light sources 41; a second cladding surrounding the first cladding; and a low-refractive-index layer disposed between the first cladding and the second cladding and having a refractive index that is lower than that of the first cladding and higher than that of the second cladding. The first cladding has a cladding diameter that is 2.5 or more times the mode field diameter of the fundamental mode of the signal light from the signal light source 51, and the low-refractive-index layer has a thickness that is equal to or more than the wavelength of the excitation light.

It should be noted that, in other words, the fiber laser 50 includes the fiber amplifier 40 described in the second embodiment and the signal light source 51 which emits signal light.

The signal light source 51 is constituted by, for example, a semiconductor laser device, a Fabry-Perot fiber laser device, or a fiber ring laser device. The signal light source 51 emits a signal with a wavelength that induces light emission from the active element doped in the amplifying optical fiber 43. The signal light emitted from the signal light source 51 enters the pump combiner 42. An optical fiber connecting the signal light source 51 and the pump combiner 42 may be a known optical fiber. A signal light emitted from the pump combiner 42 is guided through the core of the amplifying optical fiber 43. The signal light guided through the core of the amplifying optical fiber 43 is, as described in the second embodiment, amplified by a series of induced emissions which occur in the active element in the population inversion state.

The amplifying optical fiber 43 is capable of preventing or reducing heat generation caused by excitation light without significantly affecting the core characteristics. Therefore, the fiber laser 50 has ensured performance and reliability.

### [Fourth embodiment]

The following describes a fiber laser of the fourth embodiment of the present invention. It should be noted that the same or corresponding constituents to those described above are assigned identical referential numerals and their descriptions are not repeated here unless otherwise specified.

Fig. 6 schematically illustrates a configuration of a fiber laser 60 of the present embodiment. As illustrated in Fig. 6, the fiber laser 60 is a resonator fiber laser which includes a signal light source 51, excitation light sources 41, a pump combiner 42, an amplifying optical fiber 43, and a high-reflection FBG (fiber Bragg grating, light reflector) 61 and a low-reflection FBG (light reflector) 62 and in which a portion of the amplifying optical fiber 43 between the high-reflection FBG 61 and the low-reflection FBG 62 serves as a resonator.

An optical fiber connecting the pump combiner 42 with the amplifying optical fiber 43 may have the same configuration as the amplifying optical fiber 43. It should be noted, however, that the core of the optical fiber connecting the pump combiner 42 with the amplifying optical fiber 43 is not doped with an active element.

The high-reflection FBG 61 is disposed in the amplifying optical fiber 43 in the position closer to the pump combiner 42 than the low-reflection FBG 62 is. The high-reflection FBG 61 is configured to reflect at least part of light emitted from the excited active element in the amplifying optical fiber 43. The reflectance may be, for example, 100%. The low-reflection FBG 62 is configured to reflect light equal in wavelength to that reflected by the high-reflection FBG 61 to a lesser degree than does the high-reflection FBG 61. For example, the low-reflection FBG 62 is configured to reflect 50% of the light equal in wavelength to that reflected by the high-reflection FBG 61.

In the fiber laser 60, when excitation light from the excitation light sources 41 enters the first cladding of the amplifying optical fiber 43 via the pump combiner 42, the excitation light is guided through the first cladding and passes through the core, whereby the active element in the core of the amplifying optical fiber 43 goes into the population inversion state. The active element in the population inversion state undergoes a series of induced emissions in response to seed light which is naturally-emitted light. The light (signal light) which has been induced and emitted is repeatedly reflected between the high-reflection FBG 61 and the low-reflection FBG 62 and thereby is recursively amplified.

It should be noted that, in other words, the fiber laser 60 includes the fiber amplifier 40 described in the second embodiment as well as the high-reflection FBG 61 and the low-reflection FBG 62.

The amplifying optical fiber 43 is capable of preventing or reducing heat generation caused by excitation light while reducing the effects on the characteristics of light guided through the core. Therefore, the fiber laser 60 has ensured performance and reliability.

An optical fiber in accordance with an embodiment of the present invention includes: a core doped with an active element; a first cladding surrounding the core; a second cladding surrounding the first cladding; and a low-refractive-index layer that is disposed between the first cladding and the second cladding and that is lower in refractive index than the first cladding and higher in refractive index than the second cladding. The first cladding has a cladding diameter that is 2.5 or more times the mode field diameter (MFD) of the fundamental mode at a fluorescence wavelength of the active element, and the low-refractive-index layer has a thickness that is equal to or more than an absorption wavelength of the active element.

According to the above configuration, the low-refractive-index layer having a refractive index between those of the first and second claddings is disposed between the first and second claddings, and the thickness of the low-refractive-index layer is equal to or more than an absorption wavelength of the active element in the core. Therefore, when excitation light (light with a wavelength equal to an absorption wavelength of the active element) is guided through the first cladding, most of the evanescent wave of the light does not reach the second cladding. This makes it possible to prevent or reduce the generation of heat in the second cladding and thus possible to prevent or reduce the deterioration of the second cladding.

Furthermore, since the cladding diameter of the first cladding is 2.5 or more times the MFD of the fundamental mode at a fluorescence wavelength of the active element in the core, the low-refractive-index layer is sufficiently apart from the core, which makes it possible to significantly reduce the effects of the low-refractive-index layer on the signal light that is emitted upon induction from the active element and that is guided through the core (the wavelength of the signal light emitted upon induction from the active element is equal to a fluorescence wavelength of the active element). That is, it is possible to significantly reduce the effects of the low-refractive-index layer on the core characteristics such as cutoff wavelength.

Therefore, the above configuration makes it possible to achieve an optical fiber capable of preventing or reducing heat generation caused by excitation light without significantly affecting core characteristics. This makes it possible to ensure the performance and reliability of devices including the optical fiber, such as fiber lasers and fiber amplifiers.

As used herein, the active element denotes an element which goes into the population inversion state upon absorption of excitation light. Specific examples include rare earth elements such as ytterbium (Yb), erbium (Er), neodymium (Nd), thulium (Tm), and holmium (Ho). Examples of the active element other than the rare earth elements include bismuth (Bi) and chromium (Cr).

The optical fiber in accordance with an embodiment of the present invention having the above configuration may be arranged such that, in a cross section perpendicular to the waveguiding direction, the area ratio of the first cladding to the low-refractive-index layer is 85/15 or more and 90/10 or less.

Since the area ratio of the first cladding to the low-refractive-index layer in a cross section is 85/15 or more and 90/10 or less, when allowing excitation light to enter both the first cladding and the low-refractive-index layer, it is possible to effectively confine the excitation light to the first cladding.

The optical fiber in accordance with an embodiment of the present invention having the above configuration may be arranged such that the cladding diameter of the first cladding is 3.5 or more times the mode field diameter of the fundamental mode at the fluorescence wavelength of the active element.

According to the above configuration, the low-refractive-index layer is further apart from the core. This makes it possible to further reduce the effects of the low-refractive-index layer on the characteristics of the core.

The optical fiber in accordance with an embodiment of the present invention having the above configuration may be arranged such that: the core is obtained by adding, to a material for the first cladding, an element that raises the refractive index; and the low-refractive-index layer is obtained by adding, to the material for the first cladding, an element that lowers the refractive index.

The above configuration makes it possible to achieve appropriate refractive indices of the core, the first cladding, and the low-refractive-index layer.

A fiber amplifier in accordance with an embodiment of the present invention is a fiber amplifier for amplifying signal light, which includes: an optical fiber; and an excitation light source. The optical fiber includes: a core that guides the signal light; a first cladding that surrounds the core and that guides excitation light from the excitation light source; a second cladding surrounding the first cladding; and a low-refractive-index layer that is disposed between the first cladding and the second cladding and that is lower in refractive index than the first cladding and higher in refractive index than the second cladding. The first cladding has a cladding diameter that is 2.5 or more times the mode field diameter of the fundamental mode of the signal light, and the low-refractive-index layer has a thickness that is equal to or more than the wavelength of the excitation light.

According to the above configuration, the low-refractive-index layer having a refractive index between those of the first and second claddings is disposed between the first and second claddings, and the thickness of the low-refractive-index layer is equal to or more than the wavelength of the excitation light from the excitation light source. Therefore, when the excitation light is guided through the first cladding, most of the evanescent wave of the light does not reach the second cladding. This makes it possible to prevent or reduce the generation of heat in the second cladding and thus possible to prevent or reduce the deterioration of the second cladding.

Furthermore, since the cladding diameter of the first cladding is 2.5 or more times the MFD of the fundamental mode of the signal light to be amplified by the fiber amplifier in accordance with an embodiment of the present invention, the low-refractive-index layer is sufficiently apart from the core, which makes it possible to significantly reduce the effects of the low-refractive-index layer on the signal light that is emitted from the active element and that is guided through the core. That is, it is possible to significantly reduce the effects of the low-refractive-index layer on the core characteristics such as cutoff wavelength.

Since the optical fiber of the fiber amplifier in accordance with an embodiment of the present invention is capable of preventing or reducing heat generation caused by excitation light without significantly affecting core characteristics, the fiber amplifier in accordance with an embodiment of the present invention has ensured performance and reliability.

A resonator fiber laser in accordance with an embodiment of the present invention includes: the above-described fiber amplifier in accordance with an embodiment of the present invention; and two light reflectors disposed in the optical fiber. A portion of the optical fiber between the two light reflectors serves as a resonator.

Since the above configuration includes the fiber amplifier in accordance with an embodiment of the present invention, it is possible to achieve a highly reliable resonator fiber laser.

A fiber laser in accordance with an embodiment of the present invention is a fiber laser for amplifying signal light, which includes: an optical fiber; a signal light source configured to emit the signal light; and an excitation light source. The optical fiber includes: a core that guides the signal light; a first cladding that surrounds the core and that guides excitation light from the excitation light source; a second cladding surrounding the first cladding; and a low-refractive-index layer that is disposed between the first cladding and the second cladding and that is lower in refractive index than the first cladding and higher in refractive index than the second cladding. The first cladding has a cladding diameter that is 2.5 or more times the mode field diameter of the fundamental mode of the signal light, and the low-refractive-index layer has a thickness that is equal to or more than the wavelength of the excitation light.

According to the above configuration, the low-refractive-index layer having a refractive index between those of the first and second claddings is disposed between the first and second claddings, and the thickness of the low-refractive-index layer is equal to or more than the wavelength of the excitation light from the excitation light source. Therefore, when the excitation light from the excitation light source is guided through the first cladding, most of the evanescent wave of the light does not reach the second cladding. This makes it possible to prevent or reduce the generation of heat in the second cladding and thus possible to prevent or reduce the deterioration of the second cladding.

Furthermore, since the cladding diameter of the first cladding is 2.5 or more times the MFD of the fundamental mode of the signal light from the signal light source, the low-refractive-index layer is sufficiently apart from the core, which makes it possible to significantly reduce the effects of the low-refractive-index layer on the signal light that is emitted from the active element and that is guided through the core. That is, it is possible to significantly reduce the effects of the low-refractive-index layer on the core characteristics such as cutoff wavelength.

Since the optical fiber of the fiber laser in accordance with an embodiment of the present invention is capable of preventing or reducing heat generation caused by excitation light without significantly affecting core characteristics, the fiber laser in accordance with an embodiment of the present invention has ensured performance and reliability.

The present invention is not limited to the embodiments and examples described herein, but can be altered within the scope of the claims. That is, an embodiment derived from a proper combination of technical means disclosed in the embodiments or examples is also encompassed in the technical scope of the present invention.

### Industrial Applicability

The present invention is suitably applicable to optical fibers and to optical amplifiers such as fiber lasers and fiber amplifiers.

### Reference Signs List

- 1: Optical fiber
- 10: Core
- 21: First cladding
- 22: Low-refractive-index layer
- 23: Second cladding
- 40: Fiber amplifier
- 50, 60: Fiber laser
- 61: High-reflection FBG (light reflector)
- 62: Low-reflection FBG (light reflector)

## Claims

1. An optical fiber comprising:
a core doped with an active element;
a first cladding surrounding the core;
a second cladding surrounding the first cladding; and
a low-refractive-index layer that is disposed between the first cladding and the second cladding and that is lower in refractive index than the first cladding and higher in refractive index than the second cladding,
the first cladding having a cladding diameter that is 2.5 or more times a mode field diameter of a fundamental mode at a fluorescence wavelength of the active element, and
the low-refractive-index layer having a thickness that is equal to or more than an absorption wavelength of the active element.

2. The optical fiber according to claim 1, wherein, in a cross section perpendicular to a waveguiding direction, an area ratio of the first cladding to the low-refractive-index layer is 85/15 or more and 90/10 or less.

3. The optical fiber according to claim 1 or 2, wherein the cladding diameter of the first cladding is 3.5 or more times the mode field diameter of the fundamental mode at the fluorescence wavelength of the active element.

4. The optical fiber according to any one of claims 1 to 3, wherein:
the core is obtained by adding, to a material for the first cladding, an element that raises the refractive index; and
the low-refractive-index layer is obtained by adding, to the material for the first cladding, an element that lowers the refractive index.

5. A fiber amplifier for amplifying signal light comprising:
an optical fiber; and
an excitation light source,
the optical fiber including:
a core that guides the signal light;
a first cladding that surrounds the core and that guides excitation light from the excitation light source;
a second cladding surrounding the first cladding; and
a low-refractive-index layer that is disposed between the first cladding and the second cladding and that is lower in refractive index than the first cladding and higher in refractive index than the second cladding,
the first cladding having a cladding diameter that is 2.5 or more times a mode field diameter of a fundamental mode of the signal light, and
the low-refractive-index layer having a thickness that is equal to or more than a wavelength of the excitation light.

6. A resonator fiber laser comprising:
the fiber amplifier according to claim 5; and
two light reflectors disposed in the optical fiber,
wherein a portion of the optical fiber between the two light reflectors serves as a resonator.

7. A fiber laser for amplifying signal light, comprising:
an optical fiber;
a signal light source configured to emit the signal light; and
an excitation light source,
the optical fiber including:
a core that guides the signal light;
a first cladding that surrounds the core and that guides excitation light from the excitation light source;
a second cladding surrounding the first cladding; and
a low-refractive-index layer that is disposed between the first cladding and the second cladding and that is lower in refractive index than the first cladding and higher in refractive index than the second cladding,
the first cladding having a cladding diameter that is 2.5 or more times a mode field diameter of a fundamental mode of the signal light, and
the low-refractive-index layer having a thickness that is equal to or more than a wavelength of the excitation light.
